# DEMANDE DE BREVET EUROPEEN

(11) **EP 0 522 975 A1**
(43) Date de publication de la demande: **13.01.1993**
(21) Numéro de dépôt: 92402020.9
(22) Date de dépôt: 10.07.1992
(51) Int. Cl.: A47J 27/21, H05B 3/04

(54) **Ensemble chauffant pour appareil à chauffage électrique, en particulier bouilloire**

(30) Priorité: 12.07.1991 FR 9108812
(71) Demandeur: SEB S.A., F-21260 Selongey (FR)
(72) Inventeur: Lacombe, Jacques, F-70100 Arc-les-Gray (FR)
(74) Mandataire: Rodhain, Claude

(57) **Abrégé**

L'ensemble chauffant pour appareil à chauffage électrique, en particulier bouilloire, comprend une resistance électrique de chauffage tubulaire (2) destinée à être immergée dans l'eau à chauffer et un bloc (8) de connexion électrique et de régulation de la température de chauffage, l'ensemble chauffant comportant une bride métallique (5) de fixation de la résistance.

La bride (5) est en un métal ou alliage (5a) résistant à l'oxydation susceptible d'être créée au contact avec de l'eau chaude, tandis que la face de ce métal ou alliage adjacent au bloc (8) de connexion et de régulation est recouverte au moins en partie par un métal ou alliage bon conducteur thermique.

Utilisation notamment dans les bouilloires.

## Description

La présente invention concerne un ensemble chauffant pour appareil à chauffage électrique, en particulier bouilloire.

Les bouilloires comprennent un récipient à eau au fond duquel est fixée une résistance électrique de chauffage, du type tubulaire. Cette résistance est par conséquent destinée à être immergée dans l'eau à chauffer.

Les bouilloires connues comportent également un bloc de connexion électrique et de régulation de la température de chauffage de l'eau. Ce bloc comporte en particulier un organe sensible à la température de la résistance de chauffage qui coupe l'alimentation électrique de celle-ci lorsque sa température atteint une valeur prédéterminée.

Dans les bouilloires connues, la résistance de chauffage est fixée à une bride métallique qui est elle-même fixée au fond ou à la paroi latérale du récipient- à eau. Cette bride est traversée par les deux extrémités de la résistance et une partie de celle-ci est fixée par une brasure à la bride.

La face de la bride adjacente à la résistance est destinée à être en contact avec l'eau du récipient, tandis que l'autre face de la bride est adjacente au bloc de connexion et de commande et en particulier en contact avec les organes sensibles à la température.

Les brides connues sont soit en acier inoxydable soit en alliage de cuivre revêtu sur ses deux faces ou de nickel et de chrome.

Les brides en acier inoxydable présentent l'avantage d'être insensibles à l'oxydation créée par le contact avec l'eau chaude du récipient. Toutefois, la demanderesse a constaté que les brides en acier inoxydable affectaient le bon fonctionnement de la régulation thermique réalisée dans le bloc de connexion et de régulation. La demanderesse attribue cet inconvénient au fait que l'acier inoxydable est mauvais conducteur thermique, de sorte qu'il n'assure pas une bonne transmission de la chaleur entre la résistance et les organes sensibles à la température du bloc de connexion et de régulation.

Les brides en alliage cuivreux ne présentent pas cet inconvénient, mais cet alliage ne résiste pas à l'oxydation par contact avec l'eau chaude d'où la nécessité de le protéger sur ses deux faces par un dépôt de nickel ou de chrome.

Le but de la présente invention est de remédier aux inconvénients des réalisations connues en proposant un ensemble chauffant comprenant une bride qui résiste à l'oxydation et permet une bonne conduction de la chaleur.

L'invention vise ainsi un ensemble chauffant pour appareil à chauffage électrique, en particulier bouilloire, comprenant une résistance électrique de chauffage tubulaire destinée à être immergée dans l'eau à chauffer et un bloc de connexion électrique et de régulation de la température de chauffage, l'ensemble chauffant comportant une bride métallique de fixation de la résistance qui est traversée par les deux extrémités de la résistance, une partie de celle-ci étant fixée à la bride par une brasure, la face de cette bride opposée à la résistance étant adjacente au bloc de connexion et de régulation.

Suivant l'invention, cet ensemble chauffant est caractérisé en ce que la bride est en un métal ou alliage résistant à l'oxydation susceptible d'être créée au contact de l'eau chaude, tandis que la face de ce métal ou alliage adjacente au bloc de connexion et de régulation est recouverte au moins en partie par un métal ou alliage bon conducteur thermique.

La face de la bride exposée à l'eau ne risque ainsi pas d'être oxydée.

De même, l'autre face de la bride permet une bonne conduction de la chaleur qui est favorable aux bonnes conditions de régulation thermique.

Selon une version avantageuse de l'invention, le métal ou alliage bon conducteur thermique recouvre au moins la partie du métal ou alliage résistant à l'oxydation située à l'opposé de la brasure et qui est située en regard des organes sensibles à la température du bloc de connexion et de régulation.

Selon une version préférée de l'invention, le métal ou alliage résistant à l'oxydation est totalement recouvert sur sa face adjacente au bloc de connexion et de régulation par une feuille fixée par colaminage en alliage bon conducteur thermique.

L'opération de colaminage consiste à appliquer deux feuilles l'une contre l'autre, par laminage entre des rouleaux, ces feuilles étant préalablement rendues rugueuses pour améliorer l'adhérence entre les deux feuilles.

De préférence, le métal ou alliage résistant à l'oxydation est de l'acier inoxydable et le métal ou alliage bon conducteur thermique est du cuivre, un alliage cuivreux ou de l'aluminium.

D'autres particularités et avantages de l'invention apparaîtront encore dans la description ci-après.

Aux dessins annexés donnés à titre d'exemples non limitatifs :
- la figure 1 est une vue en coupe et avec arrachements d'un ensemble chauffant monté dans une bouilloire,
- la figure 2 est une vue en plan partielle de l'ensemble chauffant, suivant la flèche F de la figure 1.

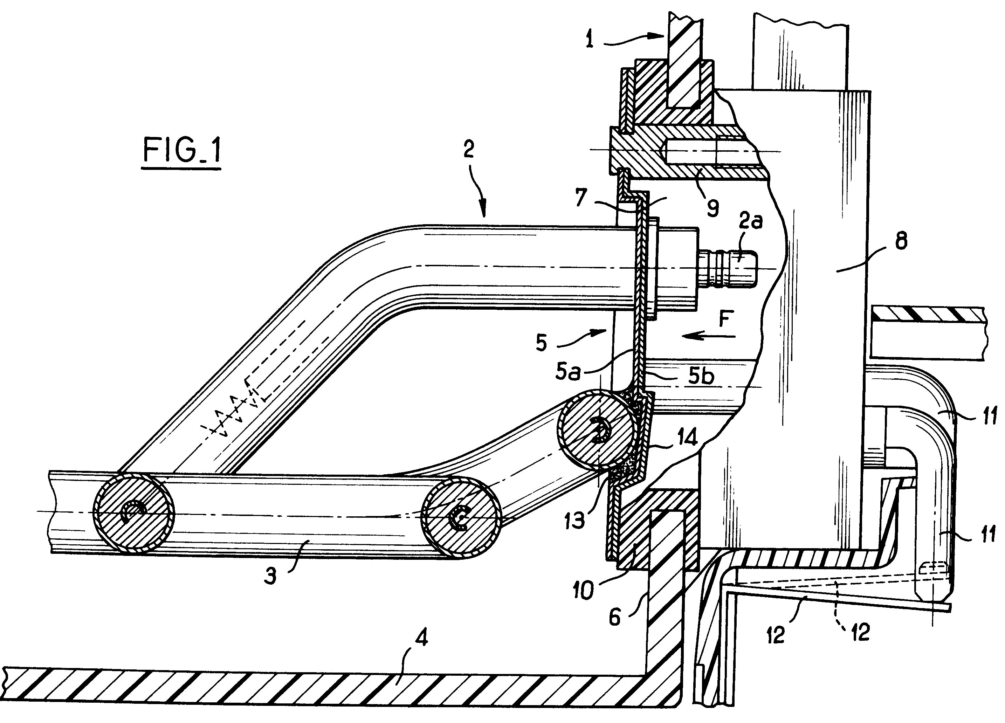

Dans la réalisation de la figure 1, on a représenté en partie, une bouilloire électrique qui comprend un récipient 1 dans lequel est fixée une résistance électrique de chauffage 2 dont les éléments tubulaires 3 gainés d'acier inoxydable s'étendent près du fond 4 du récipient.

La résistance 2 est par conséquent destinée à être immergée dans l'eau du récipient 1.

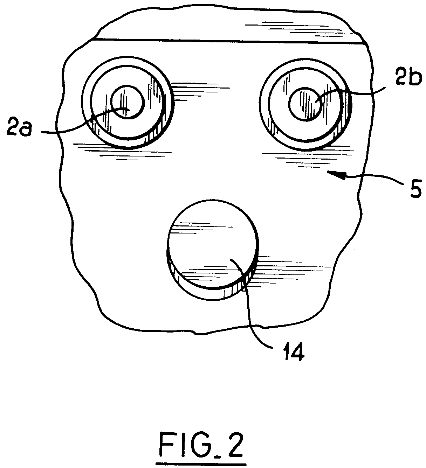

Cette résistance 2 est fixée à une bride métallique 5 qui est elle-même fixée à la paroi latérale 6 du récipient 1. La bride 5 recouvre intérieurement une ouverture 7 ménagée dans la paroi 6 et est traversée par les extrémités 2a, 2b (voir également la figure 2) de la résistance 2.

Ces extrémités 2a, 2b sont reliées au secteur par des conducteurs non représentés.

Contre la face extérieure de la paroi 6 et en regard de la bride 5 est appliqué un bloc 8 de connexion électrique et de régulation de la température de chauffage, qui est fixé à la bride 5 au moyen de goujons 9 et de vis non representées.

L'étanchéité entre la bride 5 et la paroi 6 du récipient est réalisée au moyen d'un joint souple 10 qui est comprimé entre la bride 5 et le bloc 8.

Du bloc 8 sortent des broches 11 qui sont en contact avec les lames conductrices 12 reliées au cordon d'alimentation.

Le bloc 8 renferme un thermostat et un organe sensible à la température qui coupe l'alimentation électrique de la résistance 2 à partir d'une certaine température.

La résistance 2 est en contact avec la bride 5 par une zone brasée 13. En regard de cette zone brasée 13 sur la face opposée de la bride 5 est prévue une zone 14 de prise de température pour commander le fonctionnement de la régulation thermique assurée par le bloc 8.

Dans la réalisation représentée sur la figure 1, la bride 5 est constituée par deux feuilles de métal 5a, 5b fixées l'une à l'autre par colaminage. L'épaisseur de chaque feuille 5a, 5b est de l'ordre de quelques dixièmes de mm.

La feuille 5a située du côté de la résistance 2 est en métal ou alliage résistant à l'oxydation susceptible d'être créée au contact avec de l'eau chaude. De préférence, cette feuille 5a est en acier inoxydable. Cet alliage est identique à celui qui constitue la gaine extérieure de la résistance 2, ce qui facilite par conséquent la liaison par brasure dans la zone 13.

La feuille 5b située du côté du bloc 8 est en métal ou alliage bon conducteur thermique, tel que le cuivre, un alliage cuivreux ou de l'aluminium.

Cette feuille 5b permet ainsi d'assurer un excellent transfert de chaleur entre la résistance 3 et l'organe sensible à la température qui est appliqué sur la feuille 5b au niveau de la zone 14. En particulier grâce à cette feuille 5b bonne conductrice de la chaleur, l'organe ci-dessus lit exactement la température de la résistance, ce qui permet d'obtenir une régulation de température extrêmement précise et sûre.

Dans l'exemple représenté, la bride 5 comporte dans la zone brasée 13 une cavité qui est emboutie vers le bloc 8 et qui définit la zone 14 de prise de température. Cette cavité permet également d'améliorer l'adhérence de la brasure.

Bien entendu, la feuille 5b au lieu de recouvrir toute la surface de la feuille 5a pourrait ne recouvrir qu'une partie de celle-ci. Ainsi, il suffirait que la feuille 5b ne recouvre que la zone 14 de prise de la température.

## Revendications

1. Ensemble chauffant pour appareil à chauffage électrique, en particulier bouilloire, comprenant une résistance électrique de chauffage tubulaire (2) destinée à être immergée dans l'eau à chauffer et un bloc (8) de connexion électrique et de régulation de la température de chauffage, l'ensemble chauffant comportant une bride métallique (5) de fixation de la résistance qui est traversée par les deux extrémités (2a) de la résistance (2), une partie de celle-ci étant fixée à la bride (5) par une brasure (13), la face de cette bride (5) opposée à la résistance (2) étant adjacente au bloc (8) de connexion et de régulation, caractérisé en ce que la bride (5) est en métal ou alliage (5a) résistant à l'oxydation susceptible d'être créée au contact avec de l'eau chaude, tandis que la face de ce métal ou alliage adjacente au bloc (8) de connexion et de régulation est recouverte au moins en partie par un métal ou alliage bon conducteur thermique (5b).

2. Ensemble chauffant conforme à la revendication 1, caractérisé en ce que le métal ou alliage bon conducteur thermique (5b) recouvre au moins la partie du métal ou alliage résistant à l'oxydation située à l'opposé de la brasure (13) et qui est située en regard de l'organe sensible à la température du bloc (8) de connexion et de régulation.

3. Ensemble chauffant conforme à l'une des revendications 1 ou 2, caractérisé en ce que le métal ou alliage résistant à l'oxydation (5a) est totalement recouvert sur sa face adjacente au bloc (8) de connexion et de régulation par une feuille (5b) fixée par colaminage en alliage bon conducteur thermique.

4. Ensemble chauffant conforme à l'une des revendications 1 à 3, caractérisé en ce que le métal ou alliage résistant à l'oxydation est de l'acier inoxydable.

5. Ensemble chauffant conforme à l'une des revendications 1 à 4, caractérisé en ce que le métal ou alliage bon conducteur thermique est du cuivre ou un alliage cuivreux.

6. Ensemble chauffant conforme à l'une des revendications 1 à 4, caractérisé en ce que le métal ou alliage bon conducteur thermique est de l'aluminium.

7. Ensemble chauffant conforme à l'une des revendications 1 à 6, caractérisé en ce que la zone de la bride (5) à laquelle est fixée la résistance (2) au moyen d'une brasure (13) comporte une cavité emboutie vers le bloc (8) de connexion et de commande.
